Europäisches Patentamt

European Patent Office

Office européen des brevets

(11) Publication number: **0 278 314 B1**

# EUROPEAN PATENT SPECIFICATION

(45) Date of publication of patent specification: **10.08.94**  (51) Int. Cl.⁵: **G06F 15/16**

(21) Application number: **88101088.8**

(22) Date of filing: **26.01.88**

(54) **Single system image.**

(30) Priority: **13.02.87 US 14892**

(43) Date of publication of application:
**17.08.88 Bulletin 88/33**

(45) Publication of the grant of the patent:
**10.08.94 Bulletin 94/32**

(84) Designated Contracting States:
**DE FR GB**

(56) References cited:

USENIX ASSOCIATION, SUMMER CONFER-
ENCE PROCEEDINGS, Atlanta, Georgia, 9th-
13thJune 1986, pages 248-259, USENIX Asso-
ciation; A.P. RIFKIN et al.: "RFSarchitectural
overview"

CONFERENCE PROCEEDINGS, USENIX 1986,
SUMMER TECHNICAL CONFERENCE ANDEX-
HIBITION, 1986, pages 238-247; S.R. KLEI-
MAN: "Vnodes: An architecture formultiple
file system types in sun UNIX"

(73) Proprietor: **International Business Machines
Corporation
Old Orchard Road
Armonk, N.Y. 10504 (US)**

(72) Inventor: **Johnson, Donovan William
212 Esperada
Georgetown Texas 78628 (US)**
Inventor: **Loucks, Larry Keith
10801 Pickfair Drive
Austin Texas 78750 (US)**
Inventor: **Sauer, Charles Herbert
3503 Crowncrest Drive
Austin Texas 78750 (US)**
Inventor: **Smith, Todd Allen
1802 Apricot Glen
Austin Texas 78746 (US)**

(74) Representative: **Burt, Roger James, Dr. et al
IBM United Kingdom Limited
Intellectual Property Department
Hursley Park
Winchester Hampshire SO21 2JN (GB)**

PROSEEDINGS OF THE 1ST INTERNATIONAL CONFERENCE ON COMPUTER WORKSTATIONS, San Jose, CA, 11th-14th November 1985, pages 198-208, IEEE, New York, US; R.AGRAWAL et al.:"Processor Sharing in nest: a network of computer Workstations"

NEW ELECTRONICS, vol. 16, no. 22, December 1983, London, GB; T. LAZZERINI:"Unix in a network environment"

Bach, M.J. "The design of the UNIX operating system" 1986, Prentice Hall Internat. Editions

**Description**

This invention generally relates to improvements in operating systems for a distributed data processing system and, more particularly, to an operating system for a multi-processor system interconnected by a local area network (LAN) or a wide area network (WAN). IBM's System Network Architecture (SNA) may be used to construct the LAN or WAN. The operating system according to the invention permits the accessing of files by processors in the system, no matter where those files are located in the system. The preferred embodiment of the invention is disclosed in terms of a preferred embodiment which is implemented in a version of the UNIX[1] operating system; however, the invention could be implemented in other and different operating systems.

Virtual machine operating systems are known in the prior art which make a single real machine appear to be several machines. These machines can be very similar to the real machine on which they are run or they can be very different. While many virtual machine operating systems have been developed, perhaps the most widely used is VM/370 which runs on the IBM System/370. The VM/370 operating system creates the illusion that each of several users operating from terminals has a complete System/370 with varying amounts of disk and memory capacity.

The physical disk devices are managed by the VM/370 operating system. The physical volumes residing on disk are divided into virtual volumes of various sizes and assigned and accessed by users carrying out a process called mounting. Mounting defines and attaches physical volumes to a VM/370 operating system and defines the virtual characteristics of the volumes such as size, security and ownership.

Moreover, under VM/370 a user can access and use any of the other operating systems running under VM/370 either locally on the same processor or remotely on another processor. A user in Austin can use a function a VM/370 called "passthru" to access another VM/370 or MVS/370 operating system on the same processor or, for example, a processor connected into the same SNA network and located in Paris, France. Once the user has employed this function, the files attached to the other operating system are available for processing by the user.

There are some significant drawbacks to this approach. First, when the user employs the "passthru" function to access another operating system either locally or remotely, the files and operating environment that were previously being used are no longer available until the new session has been terminated. The only way to process files from the other session is to send the files to the other operating system and effectively make duplicate copies on both disks. Second, the user must have a separate "logon" on all the systems that are to be accessed. This provides the security necessary to protect the integrity of the system, but it also creates a tremendous burden on the user. For further background, the reader is referred to the text book by Harvey M. Deitel entitled An Introduction to Operating Systems, published by Addison-Wesley (1984), and in particular to Chapter 22 entitled "VM: A Virtual Machine Operating System". A more in depth discussion may be had by referring to the textbook by Harold Lorin and Harvey M. Deitel entitled Operating Systems, published by Addison-Wesley (1981), and in particularly to Chapter 16 entitled "Virtual Machines".

The invention to be described hereinafter was implemented in a version of the UNIX operating system but may be used in other operating systems having characteristics similar to the UNIX operating system. The UNIX operating system was developed by Bell Telephone Laboratories, Inc., for use on a Digital Equipment Corporation (DEC) minicomputer but has become a popular operating system for a wide range of minicomputers and, more recently, microcomputers. One reason for this popularity is that the UNIX operating system is written in the C programming language, also developed at Bell Telephone Laboratories, rather than in assembly language so that it is not processor specific. Thus, compilers written for various machines to give them C capability make it possible to transport the UNIX operating system from one machine to another. Therefore, application programs written for the UNIX operating system environment are also portable from one machine to another. For more information on the UNIX operating system, the reader is referred to UNIX™ System, User's Manual, System V, published by Western Electric Co., January 1983. A good overview of the UNIX operating system is provided by Brian W. Kernighan and Rob Pike in their book entitled The Unix Programming Environment, published by Prentice-Hall (1984). A more detailed description of the design of the UNIX operating system is to be found in a book by Maurice J. Bach, Design of the Unix Operating System, published by Prentice-Hall (1986).

AT&T Bell Labs has licensed a number of parties to use the UNIX operating system, and there are now several versions available. The most current version from AT&T is version 5.2. Another version known as

---

[1]Developed and licensed by AT&T. UNIX is a registrered trademark of AT&T in the U.S.A. and other countries.

the Berkeley version of the UNIX operating system was developed by the University of California at Berkeley. Microsoft, the publisher of the popular MS-DOS and PC-DOS operating systems for personal computers, has a version known under their trademark as XENIX. With the announcement of the IBM RT PC[2] (RISC (reduced instruction set computer) Technology Personal Computer)) in 1985, IBM Corp. released a new operating system called AIX[3] (Advanced Interactive Executive) which is compatible at the application interface level with AT&T's UNIX operating system, version 5.2, and includes extensions to the UNIX operating system, version 5.2. For more description of the AIX operating system, the reader is referred to AIX Operating System Technical Reference, published by IBM Corp., First Edition (Nov. 1985).

The invention is specifically concerned with distributed data processing systems characterized by a plurality of processors interconnected in a network. As actually implemented, the invention runs on a plurality of IBM RT PCs interconnected by IBM's Systems Network Architecture (SNA), and more specifically SNA LU 6.2 Advanced Program to Program Communication (APPC). SNA uses as its link level Ethernet[4], a local area network (LAN) developed by Xerox Corp., or SDLC (Synchronous Data Link Control). A simplified description of local area networks including the Ethernet local area network may be found in a book by Larry E. Jordan and Bruce Churchill entitled Communications and Networking for the IBM PC, published by Robert J. Brady (a Prentice-Hall company) (1983). A more definitive description of communications systems for computers, particularly of SNA and SDLC, is to be found in a book by R. J. Cypser entitled Communications Architecture for Distributed Systems, published by Addison-Wesley (1978). It will, however, be understood that the invention may be implemented using other and different computers then the IBM RT PC interconnected by other networks than the Ethernet local area network or IBM's SNA.

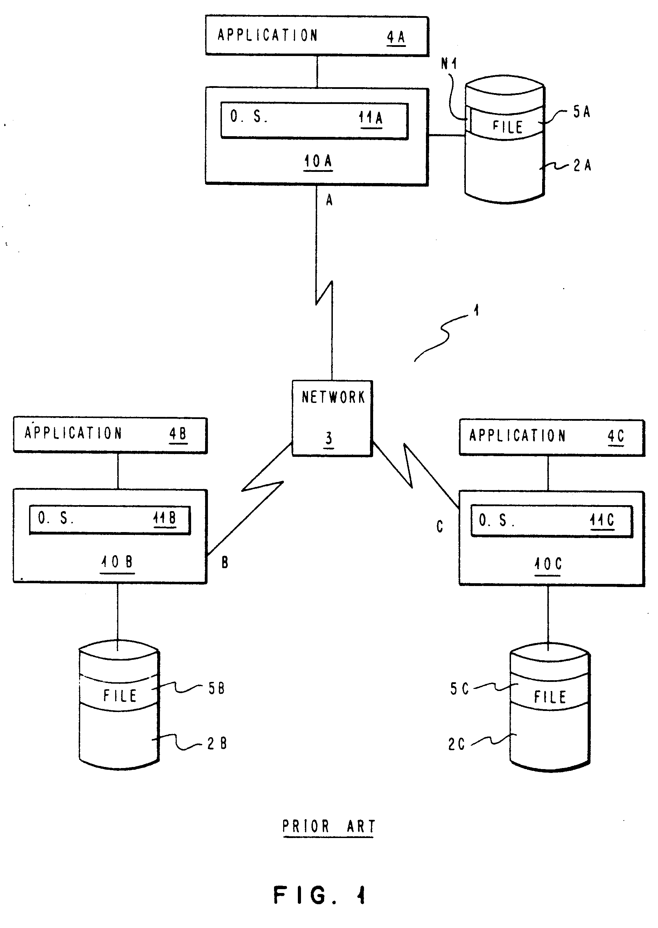

As mentioned, the invention to be described hereinafter is directed to a distributed data processing system in a communication network. In this environment, each processor at a node in the network potentially may access all the files in the network no matter at which nodes the files may reside. As shown in Figure 1, a distributed network environment 1 may consist of two or mode nodes A, B and C connected through a communication link or network 3. The network 3 can be a local area network (LAN) as mentioned or a wide area network (WAN), the latter comprising a switched or leased teleprocessing (TP) connection to other nodes or to a SNA network of systems. At any of the nodes A, B or C there may be a processing system 10A, 10B or 10C such as the aforementioned IBM RT PC. Each of these systems 10A, 10B and 10C may be a single user system of a multi-user system with the ability to use the network 3 to access files located at a remote node in the network. For example, the processing system 10A at local node A is able to access the files 5B and 5C at the remote nodes B and C.

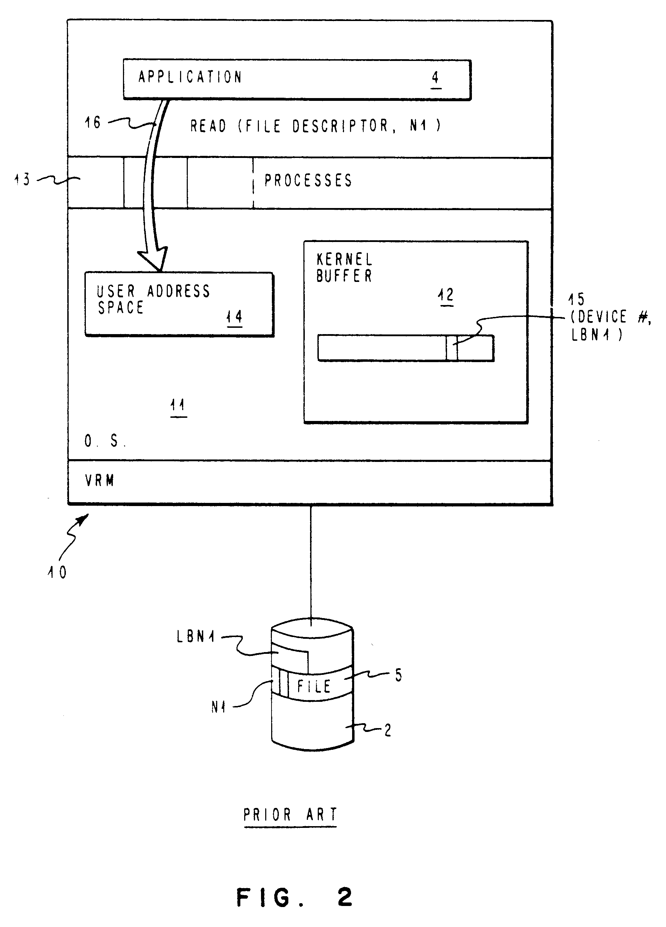

The problems encountered in accessing remote nodes can be better understood by first examining how a standalone system accesses files. In a standalone system, such as 10 shown in Figure 2, a local buffer 12 in the operating system 11 is used to buffer the data transferred between the permanent storage 2, such as a hard file or a disk in a personal computer, and the user address space 14. The local buffer 12 in the operating system 11 is also referred to as a local cache or kernel buffer. For more information on the UNIX operating system kernel, see the aforementioned books by Kernighan et al. and Bach. The local cache can be best understood in terms of a memory resident disk. The data retains the physical characteristics that it had on disk; however, the information now resides in a medium that lends itself to faster data transfer rates very close to the rates achieved in main system memory.

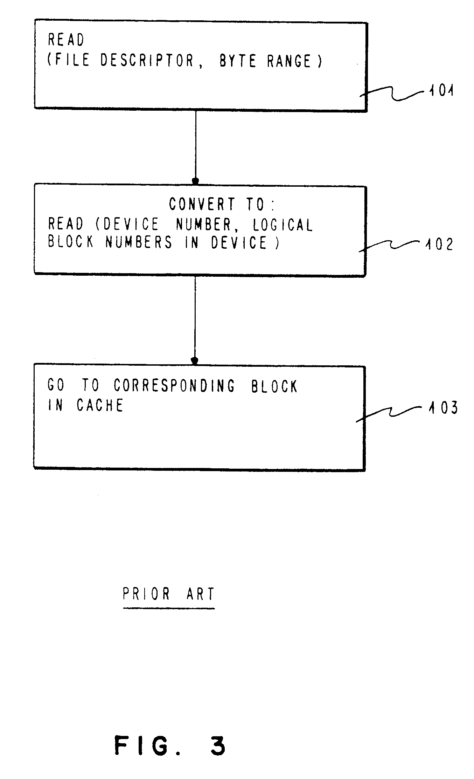

In the standalone system, the kernel buffer 12 is identified by blocks 15 which are designated as device number and logical block number within the device. When a read system call 16 is issued, it is issued with a file descriptor of the file 5 and a byte range within the file 5, as shown in step 101 in Figure 3. The operating system 11 takes this informa-tion and converts it to device number and logical block numbers of the device in step 102. Then the operating system 11 reads the cache 12 according to the device number and logical block numbers, step 103.

Any data read from the disk 2 is kept in the cache block 15 until the cache block 15 is needed. Consequently, any successive read requests from an application program 4 that is running on the processing system 10 for the same data previously read from the disk is accessed from the cache 12 and not the disk 2. Reading from the cache is less time consuming than accessing the disk; therefore, by reading from the cache, performance of the application 4 is improved. Obviously, if the data which is to be

[2]RT and RT PC are trademarks of IBM Corporation.

[3]AIX is at trademark of IBM Corporation.

[4]Ethernet is a trademark of Xerox Corporation.

accessed is not in the cache, then a disk access must be made, but this requirement occurs infrequently.

Similarly, data written from the application 4 is not saved immediately on the disk 2 but is written to the cache 12. This again saves time, improving the performance of the application 4. Modified data blocks in the cache 12 are saved on the disk 2 periodically under the control of the operating system 11.

Use of a cache in a standalone system that utilizes the AIX operating system, which is the environment in which the invention was implemented, improves the overall performance of the system disk and minimizes access time by eliminating the need for successive read and write disk operations.

In the distributed networking enviroment shown in Figure 1, there are two ways the processing system 10C in local node C could read the file 5A from node A. In one way, the processing system 10C could copy the whole file 5A and then read it as if it were a local file 5C residing at node C. Reading the file in this way creates a problem if another processing system 10B at node B, for example, modifies the file 5A after the file 5A has been copied at node C. The processing system 10C would not have access to the latest modifications to the file 5A.

Another way for processing system 10C to access a file 5A at node A is to read one block at a time as the processing system at node C requires it. A problem with this method is that every read has to go across the network communications link 3 to the node A where the file resides. Sending the data for every sucessive read is time consuming.

Accessing files across a network presents two competing problems as illustrated above. One problem involves the time required to transmit data across the network for successive reads and writes. On the other hand, if the file data is stored in the node to reduce network traffic, the file integrity may be lost. For example, if one of the several nodes is also writing to the file, to other nodes accessing the file may not be accessing the latest updated file that has just been written. As such, the file integrity is lost, and a node may be accessing incorrect and outdated files. Within this document, the term "server" will be used to indicate the processing system where the file is permanently stored, and the term client will be used to mean any other processing system having processes accessing the file. The invention to be described hereinafter is part of an operating system which provides a solution to the problem of managing distributed information.

Other approaches to supporting a distributed data processing system in a UNIX operating system environment are known. For example, Sun Microsystems has released a Network File System (NFS) and Bell Laboratories has developed a Remote File System (RFS). The Sun Microsystems NFS has been described in a series of publications including S.R. Kleiman, "Vnodes: An Architecture for Multi-ple File System Types in Sun UNIX", Conference Proceedings, USENIX 1986 Summer Technical Conference and Exhibition, pp. 238 to 247; Russel Sandberg et al., "Design and Implementation of the Sun Network Filesystem", Conference Proceedings, Usenix 1985, pp. 119 to 130; Dan Walsh et al., "Overview of the Sun Network File System", pp. 117 to 124; JoMei Chang, "Status Monitor Provides Network Locking Service for NFS"; JoMei Chang, "SunNet", pp.71 to 75; and Bradley Taylor, "Secure Networking in the Sun Environment", pp. 28 to 36. The AT&T RFS has also been described in a series of publications including Andrew P. Rifkin et al., "RFS Architectural Overview:, USENIX Conference Proceedings, Atlanta, Georgia (June 1986), pp. 248 to 259; Richard Hamilton et al., "An Administrator's View of Remote File Sharing", pp. 1 to 9; Tom Houghton et al., "File Systems Switch", pp. 1 to 2; and David J. Olander et al., "A Framework for Networking in System V", pp. 1 to 8.

One feature of the distributed services system in which the subject invention is implemented which distinguishes it from the Sun Microsystems NFS, for example, is that Sun's approach was to design what is essentially a stateless machine. More specifically, the server in a distributed system may be designed to be stateless. This means that the server does not store any information about client nodes, including such information as which client nodes have a server file open, whether client processes have a file open in read_only or read_write modes, or whether a client has locks placed on byte ranges of the file. Such an implementation simplifies the design of the server because the server does not have to deal with error recovery situations which may arise when a client fails or goes off-line without properly informing the server that it is releasing its claim on server resources.

An entirely different approach was taken in the design of the distributed services system in which the present invention is implemented. More specifically, the distributed services system may be characterized as a "statefull implementation". A "statefull" server, such as that described here, does keep information about who is using its files and how the files are being used. This requires that the server have some way to detect the loss of contact with a client so that accumulated state information about that client can be discarded. The cache management strategies described here, however, cannot be implemented unless the server keeps such state information. The management of the cache is affected, as decribed below, by the number of client nodes which have issued requests to open a server file and the read/write modes of those opens.

It is therefore a general object of this invention to provide a distributed services system for an operating system which supports a multi-processor data processing system interconnected in a communication network that provides user transparency as to file location in the network and as to performance.

It is another, more specific object of the invention to provide a technique for giving a user a single system image from any node of a distributed environment.

According to the invention, these objects are accomplished by keeping one set of master system files which each of the distributed nodes uses by creating a set of stub files at the remote node, mounting the master system files onto the stub files, copying the master system files into a set of local system files, unmounting the master system files and deleting the stub files, and mounting the master system files over the local system files. The local copies of the master system files are used in the event that the node containing the master system files is not available. In addition, a file tree for each of the individual users is maintained to allow each user to access the same files from any node in a consistent manner regardless of the node that the user is currently using.

The foregoing and other objects, aspects and advantages of the invention, which is defined in the attached claims, will be better understood from the following detailed description of the preferred embodiment of the invention with reference to the accompanying drawings, in which:

Figure 1 is a block diagram showing a typical distributed data processing system in which the subject invention is designed to operate;

Figure 2 is a block diagram illustrating a typical standalone processor system;

Figure 3 is a flowchart showing the steps performed by an operating system when a read system call is made by an application running on a processor;

Figure 4 is a block diagram of the data structure illustrating the scenario for following a path to a file operation at a local node as performed by the operating system which supports the subject invention;

Figures 5 and 6 are block diagrams of the data structures illustrating the before and after conditions of the scenario for a mount file operation at a local node as performed by the operating system;

Figure 7A shows a file tree whose immediate decendents are all directories.

Figure 7B shows a file tree whose immediate decendents are a collection of directories and simple files.

Figure 7C shows a file tree whose immediate decendents are all simple files.

Figure 8 is a block diagram of the data structure for the distributed file system shown in Figure 13;

Figures 9A to 9F are block diagrams of component parts of the data structure shown in Figure 8;

Figures 10, 11 and 12 are block diagrams of the data structures illustrating the scenarios for a mount file operation and following a path to a file at a local and remote node in a distributed system as performed by the operating system.

Figure 13 is a block diagram, similar to Figure 1, showing a distributed data processing system according to the invention.

The following disclosure describes solutions to problems which are encountered when creating a distributed file system in which the logic that manages a machine's files is altered to allow files that physically reside in several different machines to appear to be part of the local machine's file system. The implementation described is an extension of the file system of the AIX operating system. Reference should be made to the above-referenced Technical Reference for more information on this operating system. Specific knowledge of the following AIX file system concepts is assumed: tree structured file systems; directories; and file system organization, including inodes.

The essential aspects of a file system that are relevant to this discussion are listed below:

a) each file on an individual file system is uniquely identified by its inode number

b) directories are files, and thus a directory can be uniquely identified by its inode number.

Note: In some contexts it is necessary to distinguish between files which are directories and files which are not directories (e.g., files which simply contain ordinary data, or other files types supported by UNIX derivative operating systems such as special files or pipes).

In this disclosure the term "simple file" is used to indicate such a non-directory file. Unless otherwise indicated the term "file" may mean either a directory file or a simple file, and, of course, the term "directory" means a directory file.

c) a directory contains an array of entries of the following form:

name - inode number

where the inode number may be that of a simple file or that of another directory.

Note: A directory may contain other directories, which, in turn, may contain other directories or simple files.

Thus a directory may be viewed as the root of a subtree which may include many levels of descendant directories, with the leaves of the tree being "simple files".

In this disclosure the term "descendents" means all of the files which exist in the file tree below a particular directory, even those which can be reached only by going through other directories. The "immediate descendants" of a directory are only those files (simple files or directories) whose names appear in the directory.

d) by convention, the inode number of the file system's root directory is inode number 2.

The following discussion describes how traditional UNIX operating systems use mounts of entire file systems to create file trees, and how paths are followed in such a file tree.

Following the path "/dir1/dir2/file" within a device's file system thus involves the following steps:

1. Read the file identified by inode number 2 (the device's root directory).

2. Search the directory for an entry with name = dir1.

3. Read the file identified by the inode number associated with dir1 (this is the next directory in the path).

4. Search the directory for an entry with name = dir2.

5. Read the file identified by the inode number associated with dir2 (this is the next directory in the path).

6. Search the directory for an entry with name = file.

7. The inode number associated with file in this directory is the inode number of the simple file identified by the path "/dir1/dir2/file".

The file trees which reside on individual file systems are the building blocks from which a node's aggregate file tree is built. A particular device (e.g., hard file partition) is designated as the device which contains a node's root file system. The file tree which resides on another device can be added to the node's file tree by performing a mount operation. The two principal parameters to the mount operation are (1) the name of the device which holds the file tree to be mounted and (2) the path to the directory upon which the device's file tree is to be mounted. This directory must already be part of the node's file tree; i.e., it must be a directory in the root file system, or it must be a directory in a file system which has already been added (via a mount operation) to the node's file tree.

After the mount has been accomplished, paths which would ordinarily flow through the "mounted over" directory instead flow through the root inode of the mounted file system. A mount operation process as follows:

1. Follow the path to the mount point and get the inode number and device number of the directory which is to be covered by the mounted device.

2. Create a data structure which contains essentially the following:

a) the device name and inode number of the covered directory; and

b) the device name of the mounted device.

The path following in the node's aggregate file tree consists of (a) following the path in a device file tree until encountering an inode which has been mounted over (or, of course, the end of the path); (b) once a mount point is encountered, using the mount data structure to determine which device is next in the path; and (c) begin following the path at inode 2 (the root inode) in the device indicated in the mount structure.

The mount data structures are volatile; they are not recorded on disk. The list of desired mounts must be re-issued each time the machine is powered up as part of the Initial Program Load (IPL). The preceding discussion describes how traditional UNIX operating systems use mounts of entire file systems to create file trees and how paths are followed in such a file tree. Such an implementation is restricted to mounting the entire file system which resides on a device. The virtual file system concept described herein and in the reference material allows (1) mounting a portion of the file system which resides on a device by allowing the mounting of files (directories or simple files) in addition to allowing mounting of devices, and (2) mounting either remote or local directories over directories which are already part of the file tree. The invention described herein is an enhancement to the virtual file system concept which further allows the mounting of simple files (remote or local) over simple files which are already part of the file tree.

In the virtual file system, the operations which are performed on a particular device file system are clearly separated from those operations which deal with constructing and using the node's aggregate file tree. A node's virtual file system allows access to both local and remote files.

The management of local files is a simpler problem than management of remote files. For this reason, the discussion of the virtual file system is broken into two parts. The first part describes only local operations. This part provides a base from which to discuss remote operations. The same data structures and operations are used for both remote and local operations. The discussion on local operations describes those aspects of the data and procedures which are relevant to standalone operations. The discussion on remote operations adds information pertinent to remote operations without, however, reiterating what was discussed in the local operations section.

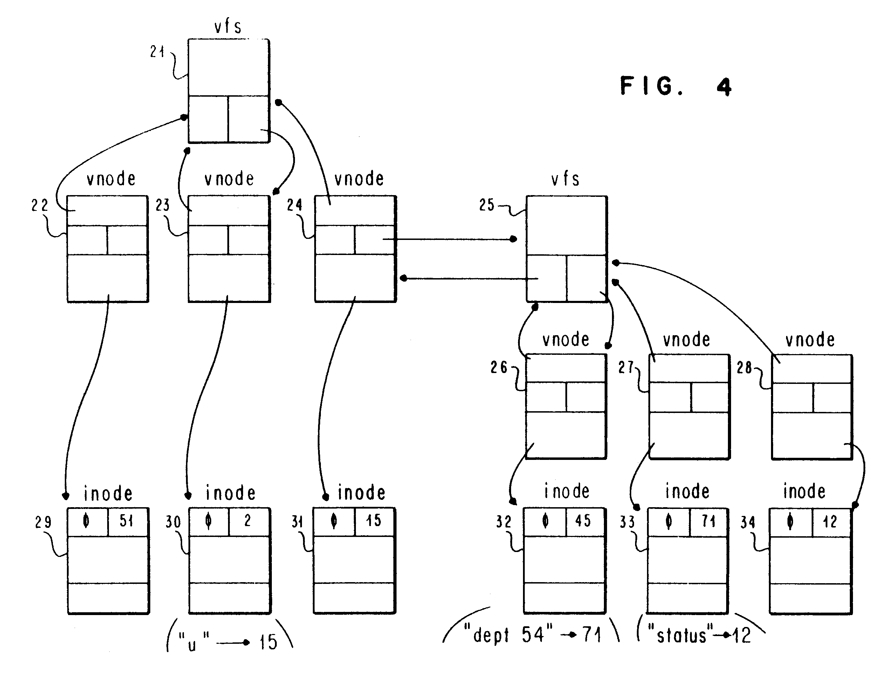

Figure 4 shows the relationship that exists among the data structures of the virtual file system. Every mount operation creates a new virtual file system (vfs) data structure. The essential elements in this structure are (a) a pointer to the root vnode (virtual node) of this virtual file system (e.g., the arrow from block 21 to block 23), and (b) a pointer to the vnode which was mounted over when this virtual file system was created (e.g., the arrow from block 25 to block 24).

Whenever an inode needs to be represented in the file system independent portion of the system, it is represented by a vnode. The essential elements in this structure are the following:

a) a pointer to vfs which contains the vnode (e.g., the arrow from block 22 to block 21);

b) a pointer to the vfs which is mounted over this vnode (e.g., the arrow from block 24 to block 25); but note however that not all vnodes are the mount point for a virtual file system, i.e., a null pointer indicates that this vnode is not a mount point;

c) a pointer to either a surrogate inode or a real inode (e.g., the arrow from block 26 to block 32); and

d) a pointer to a node table entry (this is a non-null only when the file is a remote file).

The AIX operating system, in common with other UNIX operating systems, keeps a memory resident table which contains information about each inode that is being used by the system. For instance, when a file is opened, its inode is read from the disk and a subset of this inode information, together with some additional information, is stored in the inode table. The essential elements of an inode table entry are (a) a pointer to the head of a file access structure list and (b) information from the disk inode, the details of which are not relevant here.

The file access structure records information about which nodes have the file open, and about the modes (read only or read__write) of these opens. There is a separate file access structure for each node which has the file open. This state information enables the server to know how each client is using the server file.

The file system supports a set of operations which may be performed on it. A process interacts with a file system by performing a file system operation as follows:

1. The user calls one of the operations providing (perhaps) some input parameters.

2. The file system logic performs the operation, which may alter the internal data state of the file system.

3. The file system logic returns to the calling user, perhaps returning some return parameters.

The operations which can be performed on a file system are referred to as "vn__operations" or "vn__ops". There are several vn__ops, but the ones which are important to this discussion are described below:

VN__LOOKUP

In the vn__lookup operation, the essential iterative step in following a path in a file system is to locate the name of a path component in a directory and use the associated inode number to locate the next file in the chain. The pseudo code for the vn__lookup operation on a local file is listed below:

```
function lookup
input: directory vnode pointer,
       name to be looked up in directory
output: vnode pointer to named file/dir.
  convert directory vnode pointer
      to an inode pointer;
          -- use pointer in vnode
  lock directory's inode;
  if( we don't have search permission in
          directory )
      unlock directory inode;
      return error;
  search directory for name;
  if( found )
      create file handle for name;
        -- use inode found in directory entry;


      get pointer to vnode for file handle;
      unlock directory inode;
      return pointer to vnode;
  else -- not found
      unlock directory inode;
      return error;
                  LOOKUPPN
```

## LOOKUPPN

The lookuppn operation is the function which follows paths. Its input is a path (e.g., "/dir1/dir2/file"), and its return is a pointer to the vnode which represents the file. Lookuppn calls vn__lookup to read one directory, then it checks to see if the vnode returned by vn__lookup has been mounted over. If the vnode is not mounted over, then lookuppn calls vn__lookup in the same file system. If the vnode has been mounted over, then lookuppn follows the pointer from the mounted over vnode (e.g., block 24 in Figure 4) to the vfs of the mounted file system (e.g., block 25 in Figure 4). From the vfs, it follows the pointer to the root vnode (e.g., block 26 in Figure 4) and, if the vnode is a directory and not a simple file, issues a new vn__lookup giving as input the vfs's root vnode and the name which constitutes the next element in the path. The pseudo code for the lookuppn function is listed below:

9

```
function lookuppn
input:  pathname
output: pointer to vnode for named file
   if( first character of path is '/' )
      current vnode for search is user's root
         directory vnode;
   else
      current vnode for search is user's
         current directory vnode;
   repeat


   if( next component of path is ".." )
      while( current vnode is root of a
         virtual file system )
         current vnode becomes the vnode that
            the virtual file system is mounted
            over;
         if( there is not mounted over vnode )
            return( error ); -- ".." past root
               of file system
   use vn_lookup to look up path component
      in current vnode;
   if( vn_lookup found component );
      current vnode becomes the vnode
         returned by vn_lookup;
      while( current vnode is mounted over )
         follow current vnode's pointer to vfs
            structure that represents the
            mounted virtual file system;
         current vnode becomes root vnode of
            the mounted vfs;
   else -- vn_lookup couldn't file component
      return( error ); -- search failed
   until( there are no additional path
      components );
   return( current vnode );
```

The operation will be illustrated by describing the scenarios of following a path to a file and mounting a directory. First, in following a path to a file, suppose an application process issues a system call (e.g., open) for file "/u/dept54/status". This request is accomplished by the operating system in the following manner with reference to Figure 4 (opera- tions which are basically unchanged from the UNIX operating system are not explained here in any detail). The following assumptions are made: First, the vfs represented by block 21 is the root virtual file system. Second, the file "/u" is represented by vnode block 24 and inode block 31. Third, a previous mount operation has mounted a device's file system onto the directory "/u". This mount created the vfs represented by block 25. Fourth, all of the directories and files involved are on the same device. Fifth, the following directory entries exist in the indicated directories:

| DIRECTORY INODE NUMBER | NAME | INODE NUMBER |
|---|---|---|
| 2 | "u" | 15 |
| 45 | "dept54" | 71 |
| 71 | "status" | 12 |

The code which implements the system call calls lookuppn to follow the path. Lookuppn starts at the root vnode (block 23) of the root virtual file system (block 21) and calls vn__lookup to look up the name "u" in the directory file represented by this vnode. Vn__lookup finds in the directory that the name "u" is associated with inode 15 in block 31. Vn__lookup must return a pointer to a vnode associated with inode 15. To do this it first brings inode 15 into the inode table. Then it checks to see if there is already a vnode in the parent vfs (the input vnode (block 23) has a pointer to the parent vfs) for this vnode. In this case there is. Vn__lookup then finds the vnode (block 24) in the root vfs (block 21) and returns a pointer to the vnode. Lookuppn discovers that the returned vnode is mounted over in the parent vfs. It follows the "mounted over" pointer from the vnode (block 24) to the mounted vfs (block 25). Lookuppn follows the "root vnode" pointer to the root vnode (block 26) of the new vfs (block 25). Lookuppn now calls vn__lookup again, this time inputting a pointer to the root vnode (block 26) and name "dept54". As before, vn__lookup reads the directory, finds the inode associated with the name, finds or creates a vnode for this inode in the parent vfs (block 25) and returns a pointer to this vnode. Lookuppn calls vn__lookup once more inputting the vnode for the just found directory and the name "status". Vn__lookup reads the directory, finds the inode associated with the name (block 34), finds or creates a vnode (block 28) for this inode in the parent vfs (block 25) and returns a pointer to this vnode. The code which implements the system call now performs the requested operation on the file.

Suppose now that an application process issues a "mount" system call to mount the file "/u/gorp" over the directory "/u/foo". The following scenario explains how this request is accomplished by the operating system (again, operations which are basically unchanged from the UNIX operating system are not explained in any detail).

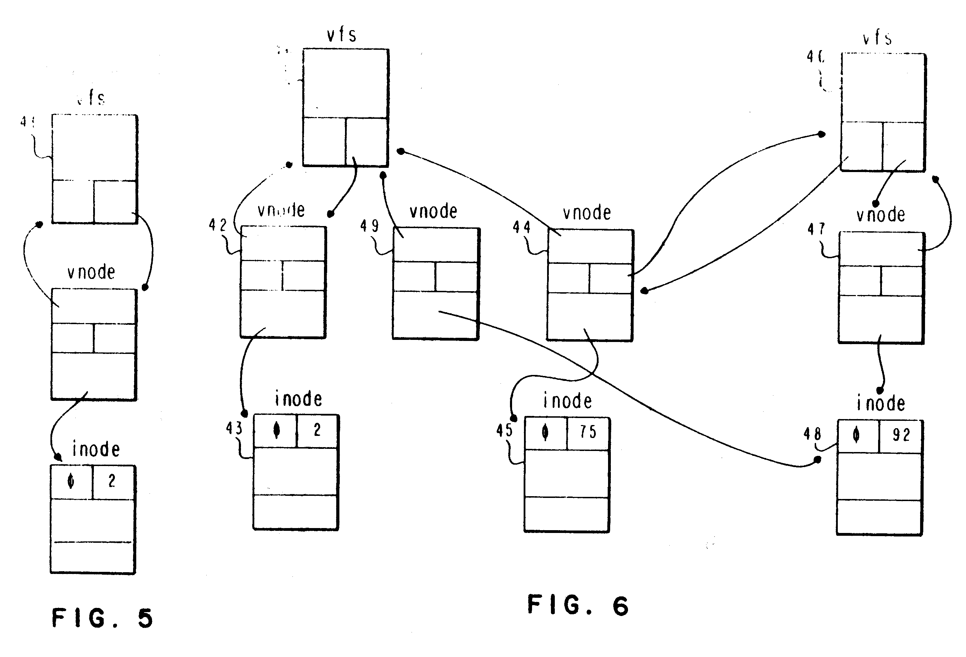

This scenario refers to Figure 5, which represents initial conditions, and Figure 6, which represents the final conditions, with the following assumptions: First, the vfs represented by block 41 is the root virtual file system. Second, all of the directories and files involved are on the same device. Third, the following directory entries exist in the indicated directories:

| DIRECTORY INODE NUMBER | NAME | INODE NUMBER |
|---|---|---|
| 2 | "u" | 15 |
| 2 | "etc" | 83 |
| 15 | "gorp" | 92 |
| 83 | "foo" | 75 |
| 75 | "file1" | 89 |

The code which implements the mount system call performs the following operations. Lookuppn is called to follow the path to the file which is to be mounted over --"/etc/foo". At the completion of this operation, the root vfs (block 41) contains a vnode for "/etc/foo" (block 44) which has a pointer to the root vfs (block 41) and pointer to an inode table entry (block 45) for inode 75. Lookuppn is called to follow a path to the file which is to be mounted -- "/etc/gorp". At the completion of this operation, the root vfs (block 41) contains a vnode for "/etc/gorp" (block 49) which has a pointer to the root vfs (block 41) and a pointer to an inode table entry (block 48) for inode 92. Now the mount logic creates the new virtual file system by first creating a new vfs (block 46) and then creating a root vnode for this vfs (block 47) with a pointer back to its parent vfs (block 46) and a pointer to the root inode (inode 92, block 48) of the vfs. A "mounted over" pointer is installed in the covered vnode (block 44) in the root vfs (block 41), and a pointer to the vnode upon which it is mounted (block 44) is installed in the new vfs.

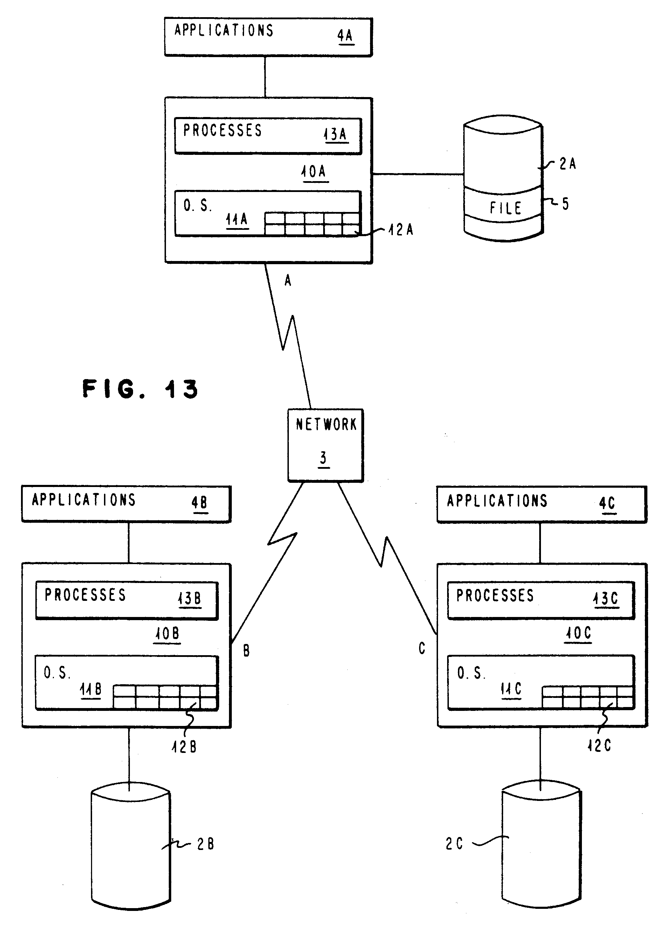

The foregoing illustrates the data structure for standalone operation. Reference is now made to Figure 13 which shows a distributed system similar to that shown in Figure 1 in which the operating system which supports the present invention has been implemented. In the following description, the term "server" is used to indicate the node where a file is permanently stored, and the term "client" is used to mean any other node having processes accessing the file. It is to be understood, however, that the term "server" does not mean a dedicated server as that term is used in some local area network systems. The distributed services system in which the invention is implemented is a truly distributed system supporting a wide variety of applications running at different nodes in the system which may access files located anywhere in the system.

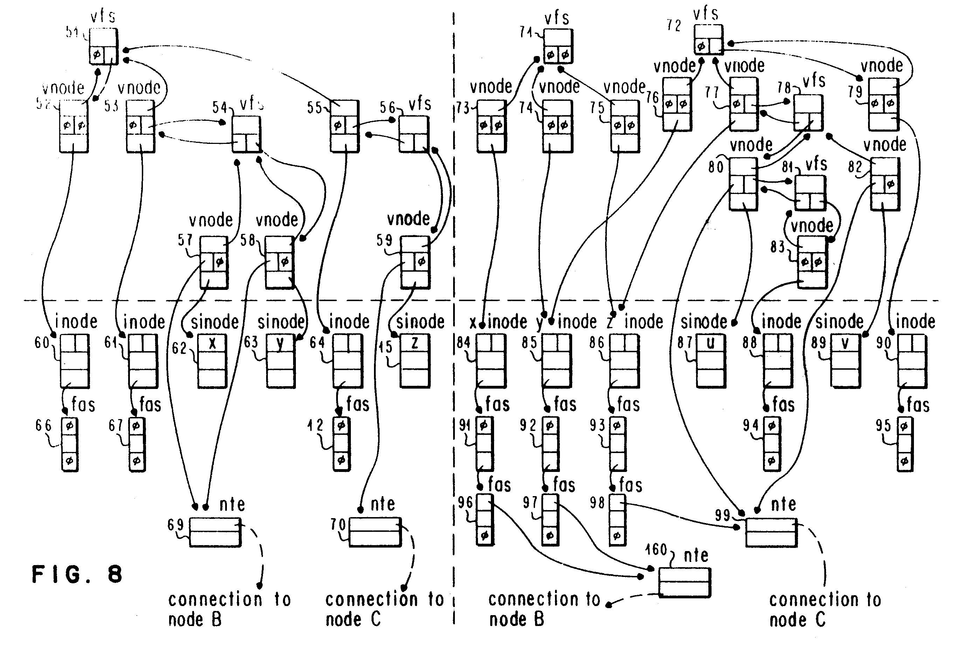

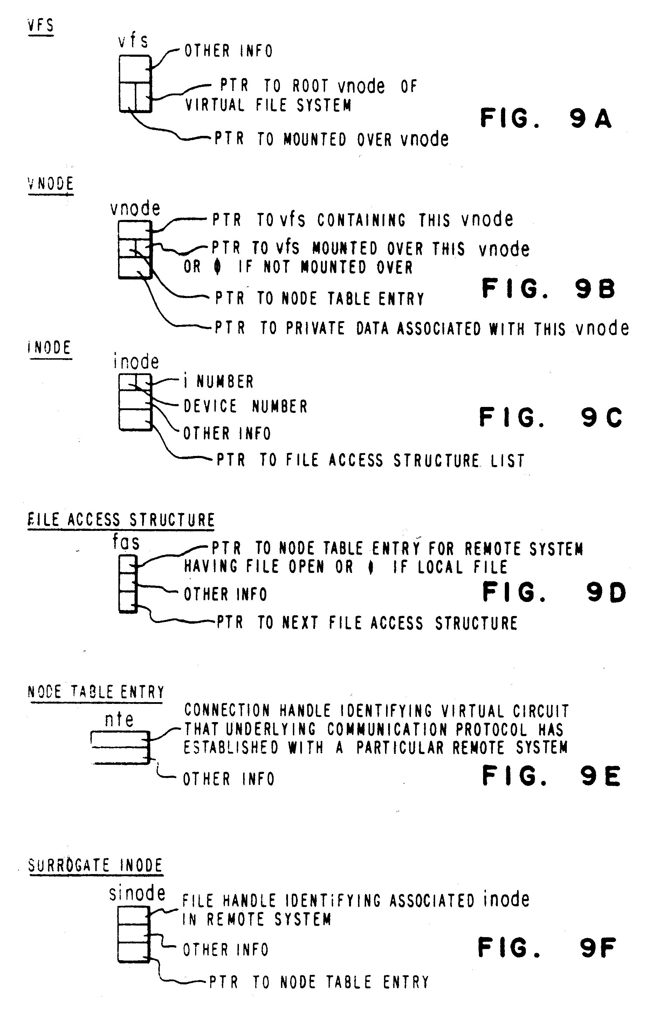

The data structure for the distributed system shown in Figure 13 is illustrated in Figure 8, and the component parts of that data structure are shown in Figures 9A to 9F. With reference to Figure 8, a client node may have access to files which reside in a remote server node. Such a client gains access to a server's files by mounting one of the server's files. In the client node, the data structures created by a remote mount operation compare to those created by mounting a local entity in the following ways: Just as in the local case, a remote mount creates a vfs in the client node (e.g., block 54). Just as in the local case, use of a file in a virtual file system which contains remote files creates a vnode structure in the client node (e.g., block 57). Just as in the local case, the vnode structure has a pointer to a inode table entry (e.g., block 63). The inode table entry, however, does not contain the inode information from the remote file. Instead, the inode table entry contains a surrogate inode. This surrogate inode stands for, or represents, the remote inode.

In the server node, some data structures are constructed to allow the server to record state information about how remote nodes are using its files. More specifically, each server has a "dummy vfs" (e.g., block 71) to provide a vfs to hold files open by remote clients. The dummy vfs is not a part of the server's file tree. For each file which is open by a remote node, there is a vnode (e.g., block 74) in the server's dummy vfs. Each file which is open by a remote node has an inode table entry in the server's inode table (e.g., block 85). This inode table entry is the same as that which exists because a local process at the server has a file open. For example, block 84, which is in the table because of a remote open, has the same structure as block 88, which is in the table because of an operation at the server.

When a client and server communicate about a server file, they need a way to identify the file. This is done with a file handle. When a client request causes the server to reply with a designation of a particular file (e.g., a remote lookup request), the file is identified by a file handle. When a client request carries a designation of a particular file (e.g., a remote open request), the file is identified by a file handle. The file handle contains the following fields: device number, inode number, and inode generation number.

The need for a file handle is illustrated by the following scenario. Suppose a client makes a request of a server and gets a file handle in reply. The client stores and remembers the file handle. Some activity at the server causes the file to be deleted and the inode slot reused for another file. The client makes a request of the server using the stored file handle. The server receives the file handle and performs the operation on the new file. This would be an unacceptable operation.

This flaw is prevented by use of the inode generation number. The inode generation number is stored on disk as a field in the inode. When the server deletes a file, it increments the inode genera- tion number. If a request arrives at a server, the file handle is broken apart, the device number and inode number are used to locate the inode, and then the file handle inode generation number is compared to the inode's inode generation number. If they are different, then the request is rejected.

When a client wants to open a file which resides on a remote server, it uses a network transport mechanism to establish a connection with the server. Subsequent transactions regarding this file (e.g., read, write, etc.) flow on this connection. Each node contains a node table. A node uses entries in its node table (e.g., block 70) to record information about existing connections to remote nodes.

There are a limited number of operations that one node in the network can request another node to perform on its behalf. These operations are called dfs_ops. When a node makes a request of another node, the following operations occur: First, the requesting node sends a message which specifies which dfs_operation is being requested and carries the parameters appropriate to that request. Next, the receiving node receives the request and performs the specified operation. Finally, the receiving node sends a message which carries the reply parameters appropriate for the dfs_operation.

There is a close correlation between the vn_ops that are issued within a local node to a file system and the dfs_ops that are issued over the network. A typical operation on a remote file is as follows: First, a local kernel issues a vn_op, not knowing whether the file being operated on is remote or local. Second, since the file resides in a remote node, the file system implementation code sends the corresponding dfs_op to the node which holds the file. Note that if the file had been a local file, the operation would have been performed, the return parameters would have been returned, and the task would have been complete. Third, the node which holds the file receives the dfs_operation request and requests its local file system to perform the corresponding vn_operation. The return parameters from this vn_op are used to construct the return parameters for the dfs_op. Fourth, the requesting node receives the dfs_op reply from the server node and uses the dfs_op return parameters to construct the return parameters to the original vn_operation request.

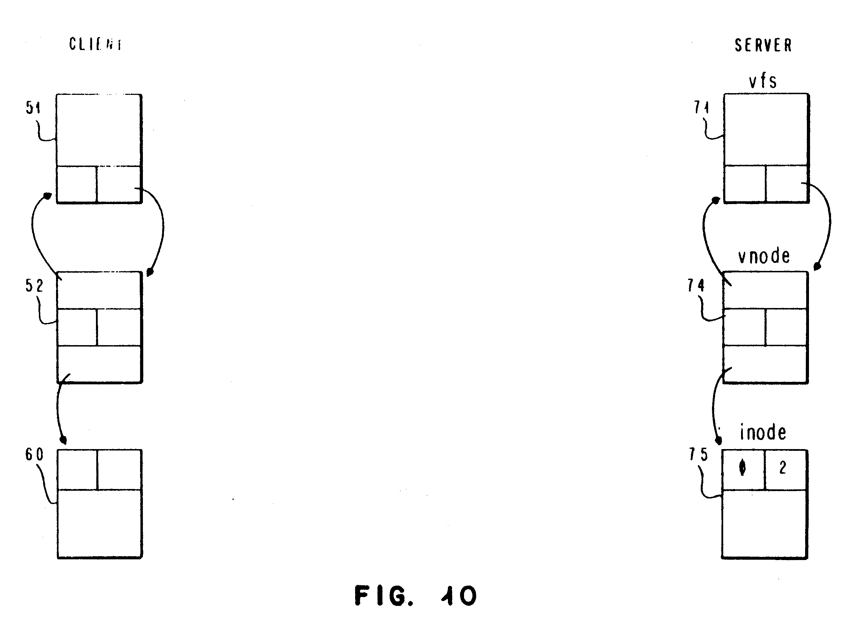

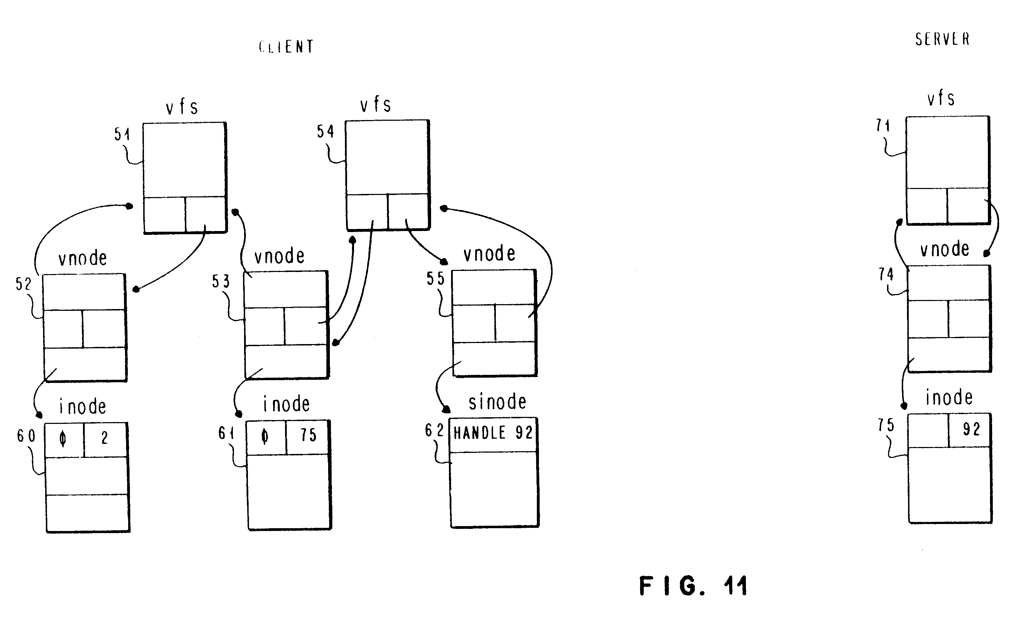

The operation will be illustrated by describing the scenarios of mounting a remote file over a local file and following a path to a file. In the first scenario, suppose that an application process in a client node issues a "mount" system call to mount a server node's file "/u/gorp" over the local client file "/etc/foo". The following scenario explains how this request is accomplished. This scenario refers to Figure 10, which represents the initial conditions, and to Figure 11, which represents the final condition, with the following assumptions: The vfs represented by block 51 is the root virtual file system of the server's file tree, and all the server directories and files involved are on the same device. The following entries exist in the indicated directories:

## Server Node

### DIRECTORY

| INODE NUMBER | NAME | INODE NUMBER |
|---|---|---|
| 2 | "u" | 15 |
| 15 | "gorp" | 92 |
| 92 | "file2" | 67 |

### Client Node

### DIRECTORY

| INODE NUMBER | NAME | INODE NUMBER |
|---|---|---|
| 2 | "etc" | 83 |
| 83 | "foo" | 75 |

The code which implements the mount system calls lookuppn to follow the path to the file which is to be mounted over - "/etc/foo". At the completion of this operation, the roof vfs (block 51) contains a vnode for "/etc/foo" (block 53) which has a pointer to the root vfs (block 51) and a pointer to an inode table entry (block 61) for inode 75. Since the file being mounted resides in a remote node, a dfs_mount request is issued to the server node, passing the path"/u/gorp" as the path to the object to be mounted. Upon receiving the dfs_mount request, the server node calls lookuppn to follow the path to the file which is to be mounted - "/u/gorp". At the completion of this lookup operation, the server's root vfs (block 71) contains a vnode for "/u/gorp" which has a pointer to the root vfs and pointer to an inode table entry for inode 92. The server uses the information in the inode (device 0, inode 92) to construct a file handle for the file "/u/gorp". The server returns this file handle in the reply to the dfs_mount request and then releases the vnode and inode. Finally, the client receives the file handle in the reply to the dfs_mount request and performs the operations necessary to create the new virtual file system as follows:

a) Create a new vfs (block 54).

b) Create a root vnode for this vfs (block 55) with a pointer back to its parent vfs (block 54) and a pointer to the root inode of the vfs (block 62). Since the root inode of this vfs is a remote file, the inode pointed to from the root vnode is a surrogate inode. This surrogate inode contains the file handle returned by the server in response to the client's dfs_mount request.

c) Install a "mounted over" pointer in the covered vnode (block 53) in the root vfs (block 51).

d) Install in the new vfs (block 54) a pointer to the vnode upon which it is mounted (block 53).

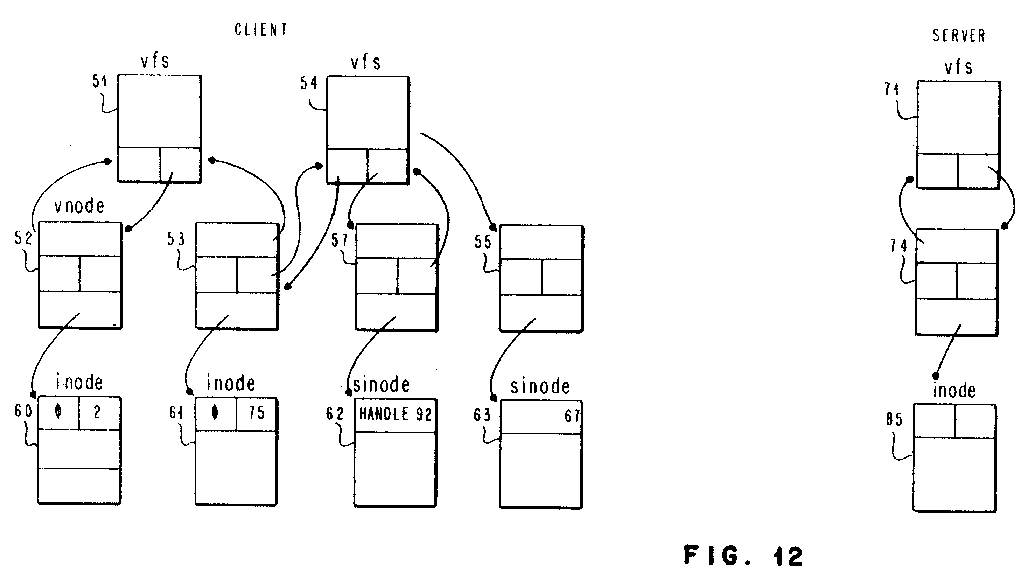

Suppose now that after executing the remote mount described above (mount server /u/gorp over client /etc/foo) a client process issues a system call to operate on the file "/etc/foo/file2". The block numbers in the following scenario refer to Figure 11, which represents initial conditions, and Figure 12, which represents the system state after the open operation. First, the code which implements the system call calls lookuppn to follow the path. Lookuppn starts at the root vnode (block 52) of the root virtual file system (block 51) and calls vn__lookup to look up the name "u" in the directory file represented by this vnode. Vn__lookup finds in the directory that the name "u" is associated with inode 15. Vn__lookup constructs a vnode and inode in the root virtual file system for inode 15 and returns to lookuppn a pointer to this vnode. Lookuppn calls vn__lookup again, this time to look up the name "foo" in the directory identified by inode 15. Vn__lookup reads the indicated directory and discovers that the name "foo" is associated with inode 75 in block 61. There already exists in the root vfs (block 51) a vnode (block 53) for this inode (block 61), so vn__lookup returns a pointer to this vnode. Lookuppn discovers that the vnode is mounted over (the "mounted over" pointer in block 53 points to block 54). Lookuppn thus follows the "mounted over" pointer to the next vfs (block 54) and follows its root vnode pointer to the root vnode (block 55) of the virtual file system. Lookuppn now calls vn__lookup for the next element ("file2") of the path giving vn__lookup a pointer to block 55 and the name "file2". The directory to be searched resides in a remote node and is identified by the file handle stored in the client surrogate inode (block 62). Vn__lookup issues a dfs__lookup to the server which holds the file, sending the file handle which identifies the directory and the name ("file2") which is to be looked up. When the server receives the dfs__lookup, it uses the file handle to identify the directory to be read and issues a vn__lookup to search for the name "file2" in this directory. Vn__lookup reads the directory and discovers that the inode number associated with the name "file2" is 67. Vn__lookup constructs a vnode and inode in the dummy virtual file system for inode 67 and returns to lookuppn a pointer to this vnode. Dfs__lookup uses the information in data structures returned by vn__lookup to construct a file handle for the file identified by inode 67. It returns this file handle to the client, as the reply to the dfs__lookup request, and releases the vnode and inode. In the client, a vnode (block 55) and surrogate inode (block 63) are created for the found file. Since "file2" is the last piece of the path, lookuppn returns to its caller a pointer to the found vnode (block 55). The code which implements the system call now performs the requested operation on the file.

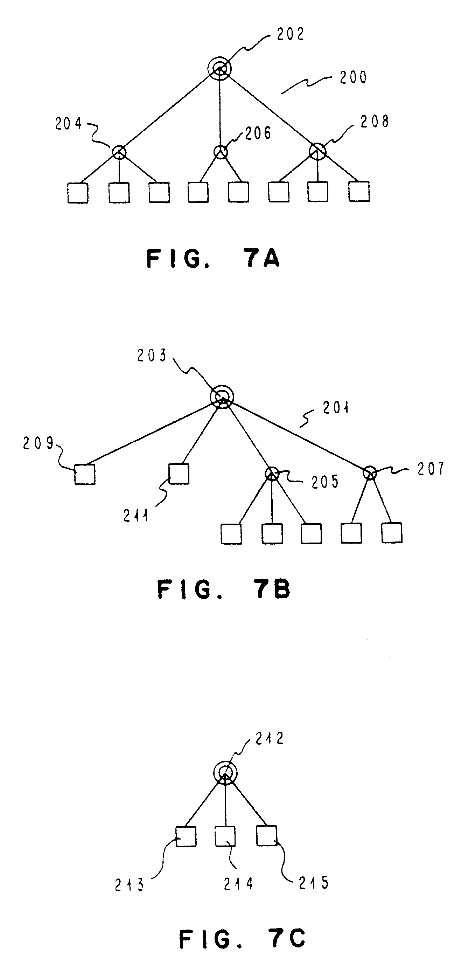

Referring to Fig. 7A, 7B, 7C, the mounting technique described above allows file trees 200, 201 to be constructed in which a directory 202, 203 in a node contains descendants which reside in different nodes. For example:

a) a directory 202 could have several immediate descendant directories 204, 206, 208 and any of these descendants 204, 206, 208 could reside in any node in the network

b) a directory 203 could have several immediate descendant directories 205, 207 and several immediate descen-dant simple files 209, 211. Any of these descendants could reside in any node in the network

c) a directory 212 could have several immediate descendant simple files 213, 214, 215 and any of these descendants could reside in any node in the network.

## SINGLE SYSTEM IMAGE

A single system image refers to the method of providing a unique environment for each user that is consistent regardless of the node that the user is currently logged on to. That means that user X will have a different view of the system than user Y; however, user X is provided with the same view of the system and the files that s/he normally uses when s/he is logged on the node A as when s/he is logged on to node B. To implement the single system image in a distributed environment and circumvent burdening the system with the management of multiple system files, a single copy of five master system files are shared by every node. These files are /etc/passwd, /etc/opasswd, /etc/group, /etc/ogroup and /etc/motd. In order to understand how the files are used in a single system image distributed environment, it is necessary to understand their operation in a UNIX operating system standalone system.

Every UNIX operating system has a file /etc/passwd that contains all the login information concerning each user. The fields in the /etc/passwd are laid out as shown below:

LOGIN-ID / ENCRYPTED PASSWORD / USER-ID / GROUP-ID/ MISCELLANY / LOGIN-DIRECTORY / SHELL

The first field, the login-id contains a user's login name identification. The second field contains the encrypted password which is designed to readily accommodate the encryption of a user's alphanumeric password but make it very difficult to transform the encrypted version of the password back to the alphanumeric version. The third field identifies the user's ID number employed by the system. The fourth field identifies the user's group-id. This field is used to identify the group of files that a particular user has permission to read, write and/or execute. The miscellany field may contain any additional character information further identifying the user. Information such as name and telephone number is often found in this field. The login-directory field contains the information defining what the user's default directory is. The final field, the shell field, contains the default shell that the user will execute under.

The fields in the /etc/passwd file are used by the UNIX operating system to set up and control a user's environment. Another file that is also responsible for controlling a user's environment in less of a direct fashion is the /etc/group file. This file encodes group names and group-ids, and defines which users are in which groups. The /etc/passwd file only identifies the login group; the /etc/group file defines which groups of files a user is authorized to use. The system determines what files an user can access on the basis of the permission granted by your USER-ID number and the user's GROUP-ID and the information in the /etc/group file.

The format of the /etc/group file is:

GROUP NAME / ENCRYPTED PASSWORD / GROUP-ID / LIST OF ALL USERS IN THE GROUP.The GROUP NAME is an alphanumeric name associated with the group. The ENCRYPTED PASSWORD is similar to the password in the /etc/passwd file and protects access to the group information. The LIST OF ALL USERS IN THE GROUP is a list of all the users that are in this user group. Each file in the UNIX operating system has a unique owner and GROUP-ID associated with it, what permissions the owner has for the file, and what permissions the group has for the file. The allowable permissions are read, write and execute. When a user logs-onto the system, the system takes the user's user name and looks up the user's user-id and group-id in the /etc/passwd file. Then the system searches the /etc/group file to determine the additional groups in which the user is a member. This set of additional groups is called the user/s concurrent group list. The user's user-id, group-id, and concurrent group list determine the files that the user is authorized to access. The concurrent group list contains all of the groups a user is a member of in addition to the group identified by the user's group-id.

The /etc/opasswd and /etc/ogroup files are copies of the /etc/passwd and /etc/group files before the last update of the files. They are backup files in case the /etc/group or /etc/passwd files are inadvertently destroyed. One additional file is also necessary to provide remote operation, the /etc/motd file. The /etc/motd file is the message of the day file. When a user logs on to the UNIX operating system, a message is displayed providing information for the day. In order to allow users at the remote nodes to get the logon message, /etc/motd must be mounted.

The single system image is implemented by keeping only one master copy of the system files described above. These copies are kept at the MASTER node. Each node has a file of instructions which are executed at system IPL (initial program load) time. The administrator places procedures in this file to mount the MASTER system's files over the node's own local copies of these files at IPL of the system. These IPL procedures that are executed by nodes where the master files do not reside are shown below using the /etc/passwd file as an example of one of the five remote mounted system files:

1) Create a Stub File.

Note: A stub is a file or directory created as a point upon which other files or directories may be mounted.

2) Mount the MASTER's /etc/passwd onto the stub as described above. (This step creates a path to the master file.)

3) Copy the MASTER's /etc/passwd into the local /etc/passwd file.

4) Unmount the MASTER's /etc/passwd file and delete the stub file

5) Mount the MASTER's /etc/passwd over the local /etc/passwd file. Once the procedure has been repeated for the other four system files, the node will be using the same files as the master. Standard UNIX operating system commands, such as the ADDUSER(1) command which alters the /etc/passwd or /etc/group file can now be run from either the MASTER or remote node (with proper author- ization).

The above example, in which several nodes share the same copy of the /etc/passwd file, uses mounting of simple files over simple files. A simple file over simple file mount (as opposed to a directory over directory mount) is necessary in this case because of the following:

First, many programs in the system are designed to assume that the path to the password file is "/etc/passwd". If the password file were moved to a different directory, e.g., "/etc/remote/passwd", all of these programs would have to be changed. This would be a significant inconvenience for users, programmers, and administrators.

Second, there are many different system configu- ration files in the /etc directory. In the single system image case several of these files, e.g., /etc/master must be local files unique to each non-master machine,

15

and several of them, e.g., /etc/passwd, must be shared from the master machine.

An attempt to give the non-master machine access to the master's /etc/passwd file by using a directory over directory mount would either cause the non-master machine's entire /etc directory to become covered by the master's /etc directory, or require the non-master to access the passwd file with a different path, e.g., /etc/master/passed. The first is unacceptable because it would also hide the non-master's local configuration files (e.g., /etc/master). The second is unacceptable because it would change the path that programs and operators use to access the passwd file.

In a distributed single system image environment, the network administrator arranges the file trees of each user so that the same directories and files are seen regardless of which node the user is logged on to. The file tree provides the capability of logging on from any machine and providing an identical interface from any node, and in effect provides a single system image of the environment from any of the nodes. The previously described remote mount capabilities allow the administrator to build a file tree as described above. An example of a file tree arrangement and the steps necessary to implement the tree is provided below:

In the example, there are three nodes, DEPT544__A, DEPT544__B and DEPT544__C. Shared department resources are held in the directory /DEPT544 in node DEPT544__A. User JOE's files are held in the directory /U/JOE in node DEPT544__B. To setup the single system image file tree described above, the network administrator would set up empty stub directory /DEPT544 in DEPT544__B and DEPT544__C and perform a remote mount mounting DEPT544__A's /DEPT544 over the local stub directory in each of the two nodes. In addition, the network administrator would set up empty stub directory /U/JOE in DEPT544__A and DEPT544__C and perform a remote mount mounting DEPT544__B's directory /U/JOE over the local stub directory in each of the two nodes. In this way, the network administrator uses remote mounts to create a single system image of the distributed environment which uniquely defines the environment for each user.

A combination of the remote mounting of the five system files and the usage of a single system image file tree to provide an identical interface from multiple nodes provides a single system image to be enabled when the MASTER is active. When the MASTER is not available, the remote node uses its own system files in read only mode until the MASTER is available. This is the reason that a stub file is employed when the initial remote mounts of the system files are performed. If the MASTER is unavailable, then the local /etc/passwd file and other system files are still accessible by the system and system operations continue normally until the MASTER is available.

However, no local update of the system files would be allowed until the remote mount of the MASTER file were successfully accomplished.

**Claims**

1. A distributed data processing system having a hierarchical file system, the data processing system comprising:

at least one file in the hierarchical file system;

a directory file having at least one immediate descendant file for which the directory file is a parent file;

means for mounting, in the data processing system, the at least one file over a name of the at least one immediate descendant file while preserving the contents of the at least one immediate descendant file thereby causing a path name to be associated with at least one portion of the hierarchial file system; and

means for accessing, by an application unaware of the location of the at least one file, contents of the mounted at least one file by using the path name.

2. A method for accessing a remote file from a local node in a data processing system having a hierarchical file system, the method comprising the steps of:

mounting the remote file in the data processing system at a remote node over a local file at a local node while preserving the contents of the local file and thereby causing a path name to be associated with at least one portion of the hierarchical file system; and

accessing, by an application unaware of the location of the remote file, the remote file at the local node through a path to the local file.

3. A method as claimed in claim 2 further comprising the step of copying the remote file to the local file before mounting the remote file over the local file.

**4.** A method as claimed in claim 3 wherein the copying step comprises:

mounting the remote file over a stub file;

copying the contents of the remote file to the local file; and

unmounting the remote file.

**5.** A distributed data processing system including a hierarchical file system and a plurality of nodes interconnected by a communication link, the data processing system comprising:

a named directory having at least one shared file containing information for use by the plurality of nodes;

at least one unique local file, residing in the named directory, containing information for use by at least one local node of the plurality of nodes;

means for mounting, in at least one local node, one of the at least one shared file residing at at least one remote node of the plurality of nodes over a named file in the named directory at the local node, while maintaining at least one unique local file at the local node, the means for mounting causing a path name to be associated with at least one portion of the hierarchical file system;

means for using, from any one of the at least one local nodes, a first path through the named directory and the named file to access the mounted at least one file; and

means for using from any one of the at least one local nodes, a second path through the named directory to access the at least one unique local file of the local node.

**6.** A method of creating a single system image for each user on each of a plurality of nodes of a distributed data processing system comprising: a plurality of systems files containing characteristics of the data processing system, at least one of the system files being a master set of system files; a plurality of user directories and files for a plurality of users; and a file of default file tree organisations for each of the users, the method comprising the steps of:

maintaining a file of default file tree organisations for each of a plurality of users;

creating a set of stub files at each of the plurality of nodes;

mounting a master set of system files onto the set of stub files to create a path from each of the nodes to the master set of system files thereby causing a path name to be associated with at least one portion of the file system;

copying the master set of system files into system files of the plurality of nodes;

unmounting the master set of system files;

deleting the set of stub files;

mounting the master set of system files over the system files of the plurality of nodes; and

creating a default file tree for each user according to default file tree organisations thereby giving each user a respective individual view of the data processing system, the individual view being identical for that user at every node in the data processing system.

**7.** A method as claimed in claim 6 further comprising the steps of:

using the plurality of system files in read only mode to continue to give each of the users a same file interface if the master set of system files are unavailable; and

mounting the master set of system files over the system files of the plurality of nodes when the master set is again available.

**8.** A method as claimed in any of claims 6 or 7 wherein a file of default file tree organisations is created for each user by the steps of:

retrieving the file of default file tree organisations for the plurality of users;

determining which of the user directories and files are contained on another of the plurality of nodes in the default file tree organisation;

creating stub directories for each of the user directories and files contained on another of the plurality of nodes; and

mounting the user directories and files over the local stub directories thereby allowing a user to have an identical view of the system as would be obtained from any other node in the system by that user.

**Patentansprüche**

1.  Ein verteiltes Datenverarbeitungssystem mit einem hierarchischen Dateisystem, wobei das Datenverarbeitungssystem folgendes umfaßt:
    mindestens eine Datei im hierarchischen Dateisystem;
    eine Verzeichnisdatei mit mindestens einer unmittelbaren Sohndatei, für die die Verzeichnisdatei eine Vaterdatei ist;
    ein Mittel zum Montieren mindestens einer Datei auf den Namen mindestens einer unmittelbaren Sohndatei im Datenverarbeitungssystem, während gleichzeitig der Inhalt mindestens einer unmittelbaren Sohndatei beibehalten wird, so daß ein Pfadname mindestens einem Teil des hierarchischen Dateisystems zugeordnet wird; und
    Mittel zum Zugriff auf den Inhalt mindestens einer montierten Datei, indem der Pfadname von einer Anwendung verwendet wird, die die Speicherstelle der Datei nicht kennt.

2.  Ein Verfahren zum Zugriff auf eine Ferndatei von einem lokalen Knoten in einem Datenverarbeitungssystem mit hierarchischem Dateisystem, wobei das Verfahren folgende Schritte umfaßt:
    die Montage der Ferndatei im Datenverarbeitungssystem bei einem Fernknoten auf eine lokale Datei in einem lokalen Knoten, wobei gleichzeitig der Inhalt der lokalen Datei beibehalten wird, und dadurch mindestens einem Teil des hierarchischen Dateisystems ein Pfadname zugeordnet wird; und
    der Zugriff auf die Ferndatei im lokalen Knoten durch einen Pfad zur lokalen Datei und zwar durch eine Anwendung, die die Speicherstelle der Ferndatei nicht kennt.

3.  Ein Verfahren nach Anspruch 2, bei dem der Schritt des Kopierens der Ferndatei in die lokale Datei durchgeführt wird, bevor die Ferndatei auf die lokale Datei montiert wird.

4.  Ein Verfahren nach Anspruch 3, bei dem der Kopierschritt folgendes umfaßt:
    das Montieren der Ferndatei auf eine Stub-Datei;
    das Kopieren des Inhalts der Ferndatei in die lokale Datei; und
    das Abmontieren der Ferndatei.

5.  Ein verteiltes Datenverarbeitungssystem mit einem hierarchischen Dateisystem und zahlreichen Knoten, die über eine Kommunikationsverbindung miteinander vernetzt sind, wobei das Datenverarbeitungssystem folgendes umfaßt:
    ein Verzeichnis mit Namen, das über mindestens eine gemeinsam benutzte Datei mit Informationen verfügt, die die zahlreichen Knoten verwenden;
    mindestens eine eindeutige lokale Datei im Verzeichnis mit Namen, wobei die Datei Informationen enthält, die mindestens ein lokaler Knoten unter den zahlreichen Knoten verwendet;
    Mittel zum Montieren von mindestens einer gemeinsam benutzten Datei, die sich in mindestens einem Fernknoten der zahlreichen Knoten befindet, auf eine Datei mit Namen im Verzeichnis mit Namen in mindestens einem lokalen Knoten, während gleichzeitig mindestens eine eindeutige lokale Datei im lokalen Knoten beibehalten wird, und das Mittel zum Montieren dafür sorgt, daß mindestens einem Teil des hierarchischen Dateisystems ein Pfadname zugeordnet wird;
    Mittel zum Benutzen eines ersten Pfades von mindestens einem lokalen Knoten aus durch das Verzeichnis mit Namen und die Datei mit Namen, um auf die montierte Datei zuzugreifen; und
    Mittel zum Benutzen eines zweiten Pfades von mindestens einem lokalen Knoten aus durch das Verzeichnis mit Namen, um auf mindestens eine eindeutige lokale Datei des lokalen Knotens zuzugreifen.

6.  Ein Verfahren zur Bildung einer Einzelsystemabbildung für jeden Benutzer auf zahlreichen Knoten eines verteilten Datenverarbeitungssystems, das folgendes umfaßt: zahlreiche Systemdateien mit Charakteristiken des Datenverarbeitungssystems, wobei mindestens eine der Systemdateien eine Mastermenge von Systemdateien ist; zahlreiche Benutzerverzeichnisse und -dateien für zahlreiche Benutzer; und eine Datei mit dem Standarddateibaumaufbau für jeden Benutzer; das Verfahren umfaßt dabei folgende Schritte:
    die Beibehaltung einer Datei mit dem Standarddateibaumaufbau für jeden der zahlreichen Benutzer;
    das Anlegen einer Menge von Stub-Dateien bei jedem der zahlreichen Knoten;
    das Montieren einer Mastermenge von Systemdateien auf die Menge der Stub-Dateien, um einen Pfad von jedem der Knoten zu der Mastermenge der Systemdateien anzulegen, wodurch mindestens einem Teil des Dateisystems ein Pfadname zugeordnet wird;

das Kopieren der Mastermenge der Systemdateien in Systemdateien der zahlreichen Knoten;

das Abmontieren der Mastermenge von Systemdateien;

das Löschen der Menge von Stub-Dateien;

das Montieren der Mastermenge von Systemdateien auf die Systemdateien der zahlreichen Knoten; und

das Anlegen eines Standarddateibaums für jeden Benutzer entsprechend dem Standarddateibaumaufbau, wodurch jeder Benutzer eine eigene Ansicht des Datenverarbeitungssystems erhält, und diese Ansicht für diesen Benutzer in jedem Knoten im Datenverarbeitungssystem gleich ist.

7. Ein Verfahren nach Anspruch 6, das folgende Schritte umfaßt:

die Verwendung von zahlreichen Systemdateien im Nur-Lesemodus, so daß jeder Benutzer weiterhin die gleiche Dateischnittstelle hat, wenn die Mastermenge von Systemdateien nicht zur Verfügung steht; und

das Montieren der Mastermenge von Systemdateien auf die Systemdateien der zahlreichen Knoten, wenn die Mastermenge wieder zur Verfügung steht.

8. Ein Verfahren nach Anspruch 6 oder 7, bei dem eine Datei des Standarddateibaumaufbaus durch folgende Schritte für jeden Benutzer angelegt wird:

das Aufrufen der Datei des Standarddateibaumaufbaus für die zahlreichen Benutzer;

das Festlegen, welches der Benutzerverzeichnisse und welche der Benutzerdateien auf einem anderen der zahlreichen Knoten im Standarddateibaumaufbau enthalten sind;

das Anlegen von Stub-Verzeichnissen für jedes der Benutzerverzeichnisse und jede der Benutzerdateien auf einem anderen der zahlreichen Knoten; und

das Montieren der Benutzerverzeichnisse und -dateien auf die lokalen Stub-Verzeichnisse, wodurch ein Benutzer eine identische Ansicht des Systems hat, so wie er dies von jedem anderen beliebigen Knoten im System hätte.

**Revendications**

1. Création d'une image unique de système dans un système de traitement de données distribué ayant un système de fichiers hiérarchiques, le système de traitement de données comprenant:

au moins un fichier dans le système de fichiers hiérarchiques;

un fichier de répertoire ayant au moins un fichier immédiat descendant pour lequel le fichier de répertoire est un fichier parent;

des moyens pour monter, dans le système de traitement de données, le au moins un fichier sur un nom du au moins un fichier immédiat descendant tout en préservant le contenu du au moins un fichier immédiat descendant, permettant de ce fait à un nom de trajet d'être associé à au moins une portion du système de fichiers hiérarchiques; et

des moyens pour avoir accès, par une application ignorant l'emplacement du au moins un fichier, au contenu du au moins un fichier monté en utilisant le même nom de trajet.

2. Procédé d'accès à un fichier à distance à partir d'un noeud local dans un système de traitement de données ayant un système de fichiers hiérarchiques, le procédé comprenant les étapes de:

monter le fichier à distance dans le système de traitement de données à un noeud à distance sur un fichier local à un noeud local tout en préservant le contenu du fichier local et permettant de ce fait au nom de trajet d'être associé à au moins une portion du système de fichiers hiérarchiques; et

accéder, par une application ignorant l'emplacement du fichier local, au fichier à distance au noeud local par un trajet menant au fichier local.

3. Procédé selon la revendication 2, comprenant en outre l'étape de copier le fichier à distance sur le fichier local avant le montage du fichier à distance sur le fichier local.

4. Procédé selon la revendication 3, dans lequel l'étape de copier comprend:

monter le fichier à distance sur un fichier de talon;

copier le contenu du fichier à distance sur le fichier local; et

démonter le fichier à distance.

**5.** Système de traitement de données distribué comprenant un système de fichiers hiérarchiques et une pluralité de noeuds interconnectés par une ligne de communication, le système de traitement de données comprenant:

un répertoire nommé ayant au moins un fichier partagé contenant des informations à utiliser par la pluralité de noeuds;

au moins un fichier local unique résidant dans le répertoire nommé, contenant des informations à utiliser par au moins un noeud local de la pluralité de noeuds;

des moyens pour monter, dans au moins un noeud local, un des au moins un fichier partagé résidant au au moins un noeud à distance de la pluralité de noeuds, sur un fichier nommé dans le répertoire nommé au noeud local, tout en maintenant au moins un fichier local unique au noeud local, les moyens pour monter permettant au nom de trajet d'être associé à au moins une portion du système de fichiers hiérarchiques;

des moyens pour utiliser, à partir de l'un quelconque du au moins un noeud des noeuds locaux, un premier trajet par le répertoire nommé pour avoir accès au au moins un fichier local unique du noeud local; et

des moyens pour utiliser, à partir de l'un quelconque d'au moins un des noeuds locaux, un deuxième trajet par le répertoire nommé pour avoir accès au au moins un fichier local unique du noeud local.

**6.** Procédé pour créer une image unique du système pour chaque utilisateur sur chacun d'une pluralité de noeuds d'un système de traitement de données distribué comprenant: une pluralité de fichiers système contenant des caractéristiques du système de traitement de données, au moins un des fichiers système étant un ensemble principal de fichiers système; une pluralité de répertoires d'utilisateur et des fichiers pour une pluralité d'utilisateurs; et un fichier d'organisations en arbre de fichiers de valeur par défaut pour chacun des utilisateurs, le procédé comprenant les étapes de:

maintenir un fichier d'organisations en arbre de fichiers de valeur par défaut pour chacun d'une pluralité d'utilisateurs;

créer un ensemble de fichiers de talon à chacun de la pluralité de noeuds;

monter un ensemble principal de fichiers système sur l'ensemble de fichiers de talon pour créer un trajet depuis chacun des noeuds jusqu'à l'ensemble principal de fichiers système, permettant de ce fait à un nom de trajet d'être associé à au moins une portion du système de fichiers;

copier l'ensemble principal de fichiers système dans les fichiers système de la pluralité de noeuds;

démonter l'ensemble principal de fichiers système;

effacer l'ensemble de fichiers de talon;

monter l'ensemble de fichiers système sur les fichiers système de la pluralité de noeuds; et

créer un arbre de fichiers de valeur par défaut pour chaque utilisateur suivant les organisations en arbre de fichiers de valeur par défaut, donnant de ce fait à chaque utilisateur une vue individuelle respective du système de traitement de données, la vue individuelle étant identique pour l'utilisateur à chaque noeud dans le système de traitement de données.

**7.** Procédé selon la revendication 6, comprenant en outre les étapes de:

utiliser la pluralité de fichiers système en mode de lecture seule pour continuer de donner à chacun des utilisateurs une même interface de fichiers si l'ensemble principal des fichiers système n'est pas disponible; et

monter l'ensemble principal de fichiers système sur les fichiers système de la pluralité de noeuds lorsque l'ensemble principal est à nouveau disponible.

**8.** Procédé selon l'une quelconque des revendications 6 ou 7, dans lequel un fichier des organisations en arbre de fichiers de valeur par défaut est créé pour chaque utilisateur par les étapes de:

récupérer le fichier des organisations en arbre de fichiers par défaut pour la pluralité d'utilisateurs;

déterminer quels sont les fichiers et répertoires d'utilisateur qui sont contenus sur un autre de la pluralité de noeuds dans l'organisation en arbre de fichiers de valeur par défaut;

créer des répertoires de talon pour chacun des fichiers et répertoires d'utilisateur contenus sur un autre de la pluralité de noeuds; et

monter les fichiers et répertoires d'utilisateur sur les répertoires de talon local, permettant de ce fait à un utilisateur d'avoir une vue identique du système telle qu'elle serait obtenue à partir d'un autre noeud quelconque du système par cet utilisateur.

PRIOR ART

FIG. 1

APPLICATION                              <u>4</u>

16 ~  READ (FILE DESCRIPTOR, N1 )

13 ~        |   |        |        PROCESSES

KERNEL
BUFFER
                        <u>12</u>                    15
                                              (DEVICE #,
                                              LBN1 )

USER ADDRESS
SPACE
            <u>14</u>

<u>11</u>

O. S.

VRM

10

LBN1

N1          FILE          5

            2

PRIOR ART

FIG.   2

```
┌─────────────────────────────────────────┐
│ READ                                     │
│ (FILE DESCRIPTOR,  BYTE RANGE )          │
│                                          │──── 101
│                                          │
└─────────────────────────────────────────┘
                    │
                    │
                    ▼
┌─────────────────────────────────────────┐
│            CONVERT TO :                  │
│  READ (DEVICE  NUMBER, LOGICAL           │
│  BLOCK NUMBERS IN DEVICE )               │──── 102
│                                          │
└─────────────────────────────────────────┘
                    │
                    │
                    ▼
┌─────────────────────────────────────────┐
│ GO  TO CORRESPONDING  BLOCK              │
│ IN CACHE                                 │
│                                          │──── 103
│                                          │
└─────────────────────────────────────────┘
```

PRIOR  ART

# FIG.  3

FIG. 4

EP 0 278 314 B1

FIG. 5

FIG. 6

FIG. 7A

FIG. 7B

FIG. 7C

FIG. 8

VFS

vfs — OTHER INFO

— PTR TO ROOT vnode OF VIRTUAL FILE SYSTEM

— PTR TO MOUNTED OVER vnode

**FIG. 9A**

VNODE

vnode — PTR TO vfs CONTAINING THIS vnode

— PTR TO vfs MOUNTED OVER THIS vnode OR $\emptyset$ IF NOT MOUNTED OVER

— PTR TO NODE TABLE ENTRY

**FIG. 9B**

— PTR TO PRIVATE DATA ASSOCIATED WITH THIS vnode

INODE

inode — i NUMBER

— DEVICE NUMBER

— OTHER INFO

**FIG. 9C**

— PTR TO FILE ACCESS STRUCTURE LIST

FILE ACCESS STRUCTURE

fas — PTR TO NODE TABLE ENTRY FOR REMOTE SYSTEM HAVING FILE OPEN OR $\emptyset$ IF LOCAL FILE

— OTHER INFO

**FIG. 9D**

— PTR TO NEXT FILE ACCESS STRUCTURE

NODE TABLE ENTRY

nte — CONNECTION HANDLE IDENTIFYING VIRTUAL CIRCUIT THAT UNDERLYING COMMUNICATION PROTOCOL HAS ESTABLISHED WITH A PARTICULAR REMOTE SYSTEM

— OTHER INFO

**FIG. 9E**

SURROGATE INODE

sinode — FILE HANDLE IDENTIFYING ASSOCIATED inode IN REMOTE SYSTEM

— OTHER INFO

**FIG. 9F**

— PTR TO NODE TABLE ENTRY

EP 0 278 314 B1

CLIENT

SERVER

vfs

51

74

52

vnode

74

60

inode

75

2

**FIG. 10**

EP 0 278 314 B1

v f s

54

v f s

54

v f s

71

vnode

52

vnode

53

vnode

55

vnode

74

inode

60   φ   2

inode

61   φ   75

sinode

62   HANDLE 92

inode

75        92

**F I G. 11**

CLIENT

SERVER

vfs

51

vfs

54

vfs

74

vnode

52

53

57

55

74

inode

60  Ø  2

inode

64  Ø  75

sinode

62  HANDLE 92

sinode

63  67

inode

85

EP 0 278 314 B1

FIG. 12

FIG. 13